# EUROPÄISCHE PATENTSCHRIFT

(11) **EP 1 010 585 B1**
(45) Veröffentlichungstag und Bekanntmachung des Hinweises auf die Patenterteilung: **15.11.2006**
(21) Anmeldenummer: 99124633.1
(22) Anmeldetag: 10.12.1999
(51) Int. Cl.: B60R 16/02

(54) **Bedienvorrichtung**
Operating device
Dispositif de commande

(30) Priorität: 15.12.1998 DE 19857837
(43) Veröffentlichungstag der Anmeldung: 21.06.2000
(73) Patentinhaber: SIEMENS AKTIENGESELLSCHAFT, 80333 München (DE)
(72) Erfinder: May, Norbert, 64859 Eppertshausen (DE)

(56) Entgegenhaltungen:
- EP-A- 0 785 380
- DE-A- 19 610 700
- DE-A- 19 651 315
- DE-A1- 4 205 875
- DE-U- 29 606 501
- GB-A- 1 384 668

## Beschreibung

Die Erfindung betrifft eine Bedienvorrichtung, insbesondere für ein Kraftfahrzeug, mit einem handbetätigbaren Stellglied und mit einem Hemmelement, welches in Abhängigkeit von Steuersignalen zur Ausübung einer Kraft auf das Stellglied ausgebildet ist.

Solche Bedienvorrichtungen werden zur Eingabe von Daten in elektronischen Geräten vielfach eingesetzt und sind damit bekannt. Der Bediener wählt zur Betätigung zunächst eine gewünschte Funktion aus, beispielsweise indem er das Stellglied druckbetätigt. Anschließend wird die Regelgröße der ausgewählten Funktion durch eine Drehbetätigung des Stellgliedes eingestellt. Die zur Drehbetätigung erforderliche Kraft ist je nach ausgewählter Funktion variabel und wird mittels des Hemmelementes erzeugt. Das Hemmelement hat hierzu einen Elektromotor, der die Hemmkraft auf das Stellglied ausübt und so eine sogenannte haptische Rückmeldung an den Bediener der Bedienvorrichtung ermöglicht. Die Kraft ist abhängig von der ausgewählten Funktionsebene und den zugehörigen, in einem Speicher abgelegten Drehmomentkennlinien, die hierzu frei programmierbar sind.

So können beispielsweise ein zur Drehgeschwindigkeit proportionales Gegenmoment, beispielsweise zur Frequenzeinstellung oder Dimmung, Raststufen, beispielsweise zur Lautstärkeregelung, haptische Marken zur Kennzeichnung spezieller Positionen des Stellgliedes, beispielsweise zur Klimasteuerung, oder auch ein ansteigendes Gegenmoment zur Kennzeichnung von Minimal- und Maximalstellungen programmiert werden. Der als Hemmelement eingesetzte Elektromotor vermag das Betätigungselement sogar in Richtung der Betätigungskraft zu beschleunigen, so dass das Betätigungselement bei einer entsprechenden Programmierung des Speichers zum Bedienen lediglich angetippt werden muss oder kann das Überschreiten eines Grenzwertes durch Vibrationen signalisieren. Hierdurch lässt sich eine einzige Bedienvorrichtung für vielfältige Anwendungsbereiche einsetzen. Daher wird die Bedienvorrichtung bevorzugt zur Einstellung der verschiedenartigen in einem Kraftfahrzeug vorhandenen Apparate und Einrichtungen wie Navigationssystem und Klimaanlage verwendet.

Bei derart gestalteten Bedienvorrichtungen ist jedoch die mittels des Hemmelementes ausgeübte Kraft, d.h. das eingestellte Drehgefühl für den Bediener, nicht unmittelbar erkennbar. Hierzu muss der Bediener zunächst das Stellglied betätigen und das eingestellte Drehgefühl, beispielsweise die Anzahl der Raststufen, "ertasten". Es ist zwar bereits daran gedacht worden, den Wert der eingestellten Funktion in seiner Grundeinstellung auf einen Mittelwert festzulegen, der dann vom Bediener individuell nach oben oder unten korrigiert werden kann, jedoch gibt auch diese Anordnung keinen Aufschluss über die Spannweite bzw. Abstufung der einstellbaren Werte.

Es ist weiterhin auch bekannt, die eingestellte Funktion und den eingestellten Wert in einem Display graphisch darzustellen. Dabei ist zwar zumeist ein minimal oder maximal einstellbarer Wert erkennbar, lässt aber keinen Rückschluss auf das zu betätigende Stellglied zu. Weiterhin ist das Display oftmals an einer zentralen Stelle angeordnet und mit mehreren Bedienvorrichtungen verbunden, deren Zuordnung häufig als sehr umständlich empfunden wird.

Aus der DE 42 05 875 A1 und der DE 196 10 700 A1 sind, dem Oberbegriff des Anspruchs 1 entsprechend, Bedienvorrichtungen mit einem handbetätigbaren Stellglied und mit einem Hemmelement, welches in Abhängigkeit von Steuersignalen zur Ausübung einer Kraft auf das Stellglied ausgebildet sind, bekannt, wobei jeweils eine Anzeige zur Darstellung von Informationen in Abhängigkeit der Steuersignale zur Ausübung der Kraft auf das Stellglied vorhanden ist, und das Stellglied als Drehsteller ausgebildet ist. Hierbei sind die Anzeigen entfernt von den Stellgliedern angeordnet.

Aus der DE 296 06 501 Ul ist eine Schaltstellungsanzeige für die Handschaltung eines Kraftfahrzeugwechselgetriebes bekannt, bei dem ein Schalthebel innerhalb einer ersten und zweiten Schaltgasse bewegbar ist und bei dem eine Schaltstellungsanzeige neben der ersten Schaltgasse angeordnet ist. Die Handhabe des Schalthebels wird in der vorgenannten Schrift nicht beschrieben, ist aber entsprechend dem üblichen Aufbau eines derartigen Schalthebels entsprechend entfernt von der Schaltstellungsanzeige angeordnet.

Der Erfindung liegt das Problem zugrunde, eine Bedienvorrichtung der eingangs genannten Art so zu gestalten, dass die Bedienung erleichtert wird. Insbesondere sollen dabei die Auswahlmöglichkeiten leicht zu erkennen sein.

Dieses Problem wird erfindungsgemäß durch eine Bedienvorrichtung mit den Merkmalen des Anspruchs 1.

Die Anzeige kann eine alphanumerische oder symbolhafte Darstellung des mittels des Hemmelementes vorgegebenen Drehgefühles aufweisen. Besonders vorteilhaft ist jedoch eine Ausführungsform der Erfindung, bei der die Anzeige ein Lichtband mit einzeln ansteuerbaren Abschnitten aufweist. Mit Hilfe des Leuchtbandes können einerseits die minimale und maximale Position, andererseits auch Raststufen durch eine entsprechende Anzahl angesteuerter Abschnitte bzw. eine stufenlose Einstellung durch ein durchgehend angesteuertes Leuchtband dargestellt werden. Dadurch ist für den Bediener der Zusammenhang zwischen der Anzeige und dem Drehgefühl unmittelbar einsichtig und erfordert somit keine weiteren Hinweise.

Hierbei ist es auch besonders günstig, wenn die Anzeige mehrere Leuchtdioden aufweist. Hierdurch lässt sich eine zuverlässig und mühelos ablesbare Anzeige erreichen, die zudem einfach in der Herstellung und in unterschiedlichen Formen und Lichtfarben erhältlich ist. Weiterhin lassen sich mit einer einzigen Leuchtdiode je nach Ansteuerung unterschiedliche Lichtfarben einstellen und so beispielsweise bestimmte Werte optisch hervorheben.

Die Erfindung ist dadurch besonders vorteilhaft, dass die Anzeige an dem Stellglied angeordnet ist. Die Zuordnung zwischen dem Stellglied und der durch das Hemmelement aufgebrachten Kraft ist dadurch ohne weiteres erkennbar. Zugleich können das Stellglied und die Anzeige als eine Baueinheit hergestellt und so der Montageaufwand reduziert werden.

Ein Drehsteller lässt sich vergleichsweise feinfühlig und exakt betätigen. Dabei kann sein zulässiger Drehwinkel mittels des Hemmelementes an die jeweilige ausgewählte Funktion optimal angepasst werden, beispielsweise erfordern wenige Raststufen einen lediglich geringen Drehwinkel im Gegensatz zu einer proportionalen Einstellung, die um so einfacher zu bedienen ist, je größer der maximale Drehwinkel gewählt ist. Die Anzeige ermöglicht dabei auch eine Visualisierung der Winkellage des möglichen Drehwinkelbereiches.

Besonders einfach ist dabei auch eine Ausführungsform der Erfindung, bei der die Anzeige am Umfang des Drehstellers positioniert ist. Dadurch entsteht eine kompakte Ausführungsform, die zugleich als eine Baueinheit ausgeführt werden kann. Dabei kann die Anzeige entweder zusammen mit dem Drehsteller drehbeweglich oder ortsfest angeordnet sein und beispielsweise von einem transparenten Bereich des Drehstellers überdeckt sein. Die drehbewegliche Ausführungsform der Anzeige ermöglicht dabei neben der Darstellung der durch das Hemmelement aufgebrachten Kraft auch das Ablesen des eingestellten Wertes aufgrund des Drehwinkels der Anzeige gegenüber einem ortsfesten Hintergrund.

Eine andere Ausführungsform der Erfindung ist auch dadurch gegeben, dass die Anzeige an einer Stirnfläche des Drehstellers angeordnet ist. Die Anzeige lässt sich dadurch mühelos ablesen und kann hierbei beispielsweise in eine zentrale Aussparung oder unterhalb eines im wesentlichen transparenten Abschnitts des Drehstellers angeordnet sein, wobei die Anzeige gemeinsam mit dem Drehsteller drehbar oder ortsfest ausgeführt sein kann. Die Anzeige kann an der Stirnfläche platzsparend angeordnet sein und ist dadurch auch während der Betätigung ablesbar.

Eine besonders vielseitige Ausführungsform der Erfindung ist gegeben, wenn die Anzeige zugleich zur Darstellung der Stellung des Stellgliedes ausgeführt ist. Neben einer Darstellung aller möglichen Stellungen des Stellgliedes, wie insbesondere die Anzahl der Raststufen oder des Maximalwertes, kann darüber hinaus auch der aktuell eingestellte Wert abgelesen werden. Dies kann beispielsweise durch optisches Hervorheben des aktuellen Wertes, beispielsweise durch eine Farbänderung der entsprechenden Leuchtdiode erfolgen. Durch die integrierte Darstellung beider Informationen können Ablesefehler weitgehend ausgeschlossen und der Herstellungsaufwand weiter reduziert werden.

Eine besonders praxisgerechte Weiterbildung der Erfindung ist dadurch gegeben, dass die Bedienvorrichtung eine Anzeige zur Darstellung einer ausgewählten Funktion hat. Auf weitere Hilfsmittel zur Darstellung der ausgewählten Funktion kann daher verzichtet werden. Insbesondere bei Verwendung mehrerer Bedienvorrichtungen muss der Bediener daher nicht zunächst entscheiden, welche Bedienvorrichtung der jeweiligen Funktion zugeordnet ist, sondern kann dies unmittelbar der Anzeige entnehmen. Die Bedienvorrichtung ist dadurch zugleich eine Baueinheit und eine Funktionseinheit, deren Bedienung ohne zusätzliche Hilfsmittel problemlos vorgenommen werden kann.

Hierzu könnte die Anzeige eine Darstellung von Symbolen, beispielsweise Piktogrammen, ermöglichen. Besonders vielseitig ist hingegen eine Weiterbildung der Erfindung bei der die Anzeige eine LCD-Anzeige aufweist. Die Bedienvorrichtung ist dadurch an beliebige Verwendungszwecke anpassbar. Die gewünschten Informationen können dabei individuell eingegeben werden, so dass mit einer einzigen Bedienvorrichtung eine nahezu beliebige Anzahl unterschiedlicher Funktionen betätigt werden können. Dabei kann sowohl eine spätere Nachrüstung weiterer Funktionen als auch eine Anpassung an den fortschreitenden Stand der Technik mühelos und gegebenenfalls auch vom Endverbraucher vorgenommen werden.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine geschnittene Vorderansicht einer erfindungsgemäßen Bedienvorrichtung,
- Fig. 2: eine perspektivische Darstellung eines Drehstellers der Bedienvorrichtung,
- Fig. 3: eine Draufsicht auf den Drehsteller,
- Fig. 4: eine Draufsicht auf den Drehsteller mit einer anderen eingestellten Funktion,
- Fig. 5: eine Draufsicht auf den Drehsteller mit einer weiteren eingestellten Funktion,
- Fig. 6: eine Draufsicht auf einen Drehsteller eines weiteren Stellgliedes mit einer zusätzlichen Anzeige.

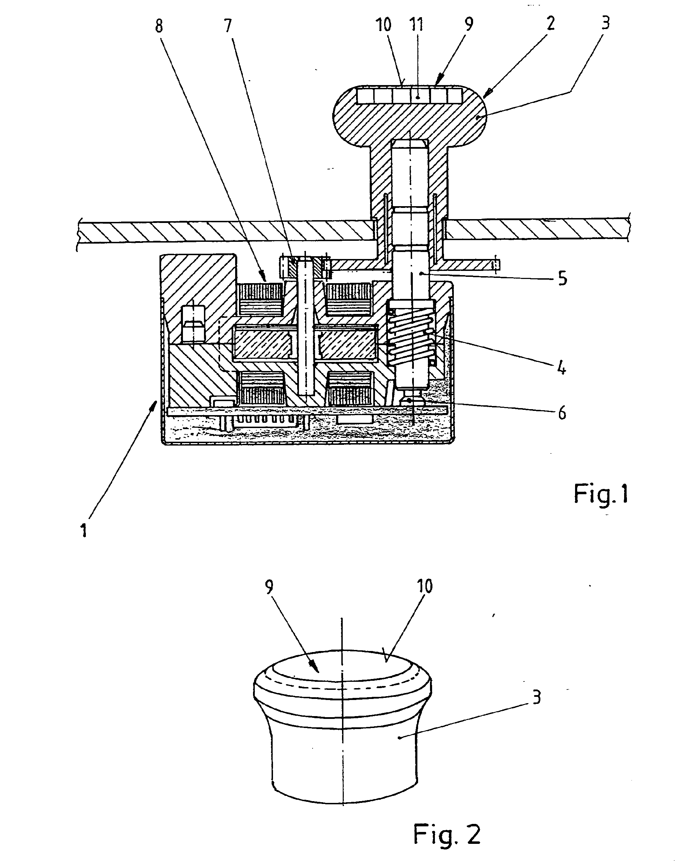

Figur 1 zeigt eine Schnittdarstellung einer erfindungsgemäßen Bedienvorrichtung 1 mit einem einen Drehsteller 3 aufweisenden Stellglied 2. Das Stellglied 2 hat eine gegen die Federkraft eines Federelementes 4 druckbetätigbare Welle 5, die auf einen Taster 6 wirkt. Durch mehrmaliges Drücken des Stellgliedes 2 kann die gewünschte Funktion ausgewählt und durch eine Drehbetätigung des Stellgliedes 2 der gewünschte Wert eingestellt werden. Mittels eines Zahnrades 7 wirkt ein Hemmelement 8 auf das Stellglied 2 und vermittelt dem Bediener der Bedienvorrichtung 1 je nach ausgewählter Funktion ein entsprechendes und individuell definierbares Drehgefühl. Insbesondere lässt sich das Drehgefühl feiner Raststufen, haptischer Marken, minimaler und maximaler Stellungen etc. vermitteln. Dieses von dem Hemmelement 8 erzeugte Drehgefühl wird mittels einer Anzeige 9 an einer Stirnfläche 10 an der Oberseite des Drehstellers 3 des Stellgliedes 2 optisch dargestellt. Hierzu hat die Anzeige 9 mehrere, einzeln mittels einer nicht dargestellten Steuereinheit ansteuerbare Leuchtdioden (LED) 11, die beispielsweise entsprechend der Anzahl und Position der Raststufen ansteuerbar sind. Die Anzeige 9 ist hierbei unterhalb der im wesentlichen transparenten Stirnfläche 10 des Drehstellers 3 und somit vor Beschädigung und Umwelteinflüssen geschützt angeordnet.

Den Drehsteller 3 zeigt Figur 2 in einer perspektivischen Ansicht. Zu erkennen ist die im wesentlichen transparente Ausführung der Stirnfläche 10 des Drehstellers 3. Unterhalb der Stirnfläche 10 ist die kreisförmige Anzeige 9 angeordnet, die dadurch auch während der Betätigung durch ihre zentrale Anordnung für den Bediener ablesbar bleibt.

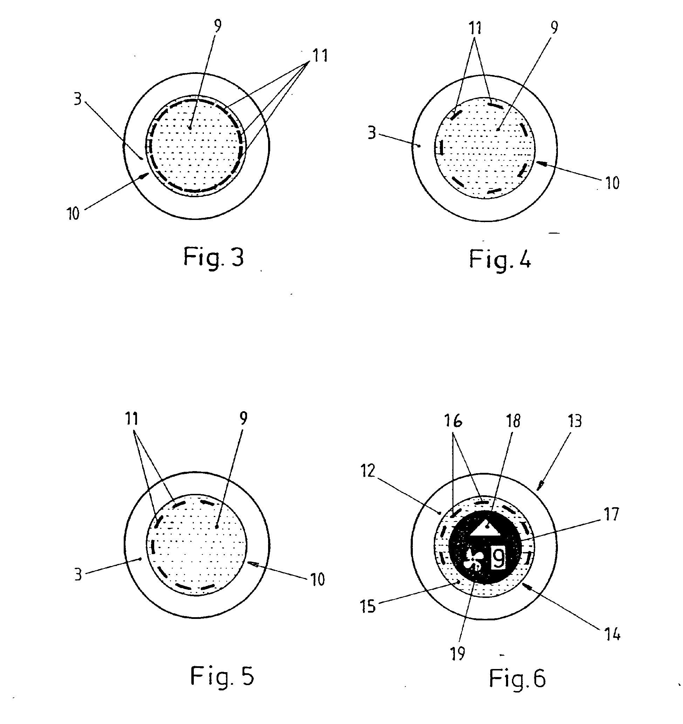

Figur 3 zeigt eine Draufsicht auf den Drehsteller 3 mit der unterhalb der transparenten Stirnfläche 10 angeordneten Anzeige 9. Die kreisförmig angeordneten Leuchtdioden 11 sind in dem dargestellten Funktionszustand ausnahmslos angesteuert, so dass der Bediener die Anzeige 9 als hellen Kreis wahrnimmt und ihm somit das eingestellte Drehgefühl eines proportionalen, rastfreien Drehmomentes mit einem 360°-Drehwinkel visualisiert wird.

Ein anderes mittels der Anzeige 9 dargestelltes Drehgefühl zeigt Figur 4. Hierbei sind sieben über den Umfang der Stirnfläche 10 des Drehstellers 3 gleichmäßig verteilte Leuchtdioden 11 einzeln angesteuert und visualisieren dem Bediener auf diesem Wege ein sieben Raststufen entsprechendes Drehgefühl.

Eine ähnliche Ansteuerung des Drehstellers 3 zeigt die Anzeige 9 in Figur 5. Hierbei sind ebenfalls sieben einzelne Leuchtdioden 11 angesteuert. Im Gegensatz zu dem in der Figur 4 gezeigten Funktionsmodus sind hierbei die Raststufen nicht über den Umfang, sondern im wesentlichen auf der linken Hälfte der Stirnfläche 10 gleichmäßig verteilt. Dieses ist dann von Vorteil, wenn die räumliche Lage der Raststufen dem Bediener eine logische Zuordnung zu der ausgewählten Funktion ermöglicht. Beispielsweise kann damit eine Scheinwerfer-Höhenverstellung betätigt werden, wobei die obere Leuchtdiode 11 zugleich auch der höchsten Stellung eines Scheinwerfers entspricht.

Eine Draufsicht auf einen Drehsteller 12 eines weiteren Stellgliedes 13 zeigt Figur 6. Dabei ist an einer Stirnfläche 14 des Drehstellers 12 eine Anzeige 15 angeordnet, die neben mehreren Leuchtdioden 16 auch eine zentral angeordnete LCD-Anzeige 17 aufweist. In dem gezeigten Funktionsmodus sind zunächst mittels der Leuchtdioden 16 die verfügbaren sieben Raststufen dargestellt. Die LCD-Anzeige 17 zeigt zusätzlich mittels eines Zeigers 18 den aktuell eingestellten Wert der ausgewählten Funktion, die in Form eines Symbols 19 dargestellt ist. Im vorliegenden Fall ist die Funktion der Lüftung in der vierten Raststufe ausgewählt, wobei zusätzlich durch die Ziffer "9" beispielsweise die momentane Außentemperatur angezeigt wird. Bei dieser Ausführungsform ist die nicht weiter dargestellte Bedienvorrichtung als eine integrierte Funktionseinheit ohne ein zusätzliches Display vielseitig einsetzbar.

## Patentansprüche

1. Bedienvorrichtung, insbesondere für ein Kraftfahrzeug, mit einem handbetätigbaren Stellglied (2) und mit einem Hemmelement (8), welches in Abhängigkeit von Steuersignalen zur Ausübung einer Kraft auf das Stellglied ausgebildet ist, wobei eine Anzeige (9, 15) zur Darstellung von Informationen in Abhängigkeit der Steuersignale zur Ausübung der Kraft auf das Stellglied (2, 13) vorhanden ist und das Stellglied (2, 13) einen Drehsteller (3, 12) hat,
**dadurch gekennzeichnet, dass** die Anzeige (9, 15) am Umfang des Drehstellers (3, 12) positioniert oder
an einer Stirnfläche (10, 14) des Drehstellers (2, 13) angeordnet ist.

2. Bedienvorrichtung nach Anspruch 1, **dadurch gekennzeichnet, dass** die Anzeige (9, 15) ein Lichtband mit einzeln ansteuerbaren Abschnitten aufweist.

3. Bedienvorrichtung nach Anspruch 1 oder 2, **dadurch gekennzeichnet, dass** die Anzeige (9, 15) mehrere Leuchtdioden (11, 16) aufweist.

4. Bedienvorrichtung nach einem der vorhergehenden Ansprüche, **dadurch gekennzeichnet, dass** die Anzeige (9, 15) zugleich zur Darstellung der Stellung des Stellgliedes (2, 13) ausgeführt ist.

5. Bedienvorrichtung nach einem der vorhergehenden Ansprüche, **dadurch gekennzeichnet, dass** die Bedienvorrichtung (1) eine Anzeige (9, 15) zur Darstellung einer ausgewählten Funktion hat.

6. Bedienvorrichtung nach einem der vorhergehenden Ansprüche, **dadurch gekennzeichnet, dass** die Anzeige (9, 15) eine LCD-Anzeige (17) aufweist.

## Claims

1. A control device, in particular for a motor vehicle, having an actuator (2) which can be activated manually, and having an arresting element (8) which is designed to exert a force on the actuator as a function of control signals, in which a display (9, 15) for representing information as a function of the control signals for exerting the force on the actuator (2, 13) is present and the actuator (2, 13) has a rotary actuating element (3, 12), **characterized in that** the display (9, 15) is positioned on the circumference of the rotary actuating element (3, 12) or is arranged on an end face (10, 14) of the rotary actuating element (2, 13).

2. The control device as claimed in claim 1, **characterized in that** the display (9, 15) has a row of illuminable elements with sections which can be driven individually.

3. The control device as claimed in claim 1 or 2, **characterized in that** the display (9, 15) has a plurality of LEDs (11, 16).

4. The control device as claimed in one of the preceding claims, **characterized in that** the display (9, 15) is at the same time designed to represent the position of the actuator (2, 13).

5. The control device as claimed in one of the preceding claims, **characterized in that** the control device (1) has a display (9, 15) for representing a selected function.

6. The control device as claimed in one of the preceding claims, **characterized in that** the display (9, 15) has an LCD (17).

## Revendications

1. Dispositif de commande, notamment pour un véhicule automobile, comportant un organe de réglage (2) actionné à la main et un organe de freinage (8) conçu pour exercer une force sur l'organe de réglage en fonction de signaux de commande, où il existe un affichage (9, 15) permettant de représenter des informations en fonction des signaux de commande destinés à provoquer la force sur l'organe de réglage (2, 13) et où l'organe de réglage (2, 13) a un actuateur rotatif (3, 12),
**caractérisé par le fait que** l'affichage (9, 15) est positionné sur la périphérie de l'actuateur rotatif (3, 12) ou disposé sur une surface frontale (10, 14) de l'actuateur rotatif (2, 13).

2. Dispositif de commande selon la revendication 1, **caractérisé par le fait que** l'affichage (9, 15) comporte une bande lumineuse avec des sections pouvant être excitées séparément.

3. Dispositif de commande selon la revendication 1 ou 2, **caractérisé par le fait que** l'affichage (9, 15) comporte plusieurs diodes électroluminescentes (11, 16).

4. Dispositif de commande selon l'une des revendications précédentes, **caractérisé par le fait que** l'affichage (9, 15) est conçu en même temps pour représenter la position de l'organe de réglage (2, 13).

5. Dispositif de commande selon l'une des revendications précédentes, **caractérisé par le fait que** le dispositif de commande (1) a un affichage (9, 15) permettant de représenter une fonction sélectionnée.

6. Dispositif de commande selon l'une des revendications précédentes, **caractérisé par le fait que** l'affichage (9, 15) comporte un affichage à cristaux liquides ou afficheur LCD (17).
